# EUROPEAN PATENT APPLICATION

(11) **EP 0 874 260 A1**
(43) Date of publication of application: **28.10.1998**
(21) Application number: 98201256.9
(22) Date of filing: 20.04.1998
(51) Int. Cl.: G02B 6/44, H01R 13/523, H02G 15/14

(54) **Duct system, coupling, and also method for manufacturing a duct system**

(30) Priority: 21.04.1997 NL 1005863
(71) Applicant: POLVA PIPELIFE B.V., 1600 AJ Enkhuizen (NL)
(72) Inventor: Bursens, Paul, 2920 Kalmthout (BE)
(74) Representative: de Bruijn, Leendert C.

(57) **Abstract**

A duct system for glass-fibre networks comprises at least one coupling and also at least two duct pipes which each carry at least two electrical conductors at a distance from one another, which electrical conductors extend from the one end in each case of a duct pipe to its other end, which coupling comprises a housing which has at each of two ends a coupling sleeve in each of which a duct pipe is receivable, which coupling sleeves each have means for mechanically connecting the duct pipes, and also at least two separate contact means which extend in the longitudinal direction of the coupling, which contact means are each in contact both with one of the electrical conductors of the one duct pipe and with one of the electrical conductors of the other duct pipe.

## Description

The invention relates to the field of buried glass-fibre cables for telecommunication, cable networks for television, and the like. Because such cables are too vulnerable to be laid directly in the ground, a duct system is first laid which comprises duct pipes in which the glass-fibre cables are then installed by pulling or by a blowing procedure. The duct pipes of such a duct system are mutually coupled by couplings which ensure both a good mechanical attachment and also the required watertightness.

For reasons of position determination, the duct system has two electrical conductors which are embedded in the wall and which make contact with one another at the position of the couplings in such a way that the position of the duct system can be determined if an electrical current is passed through the conductors.

In this connection it is known from EP-A-449795 to interconnect the electrical conductors of two plastic pipes by means of two pairs of knife-shaped contacts which are coupled for each pair by a flexible conducting wire. The knife-shaped contacts are each clamped to an end of two adjacent duct pipes by means of two yokes in such a way that they are forced into their wall and finally make contact with the electrical conductors by means of their cutting edge.

This known method of interconnecting electrical conductors has a number of disadvantages. First of all, the making of a contact by means of knife-shaped parts is suitable only for softer types of plastic. In duct pipes composed of HDPE, such an incision into the wall is in any case impossible.

In connection with making the incision, the yokes have to be clamped to the duct pipe with a certain force. For this purpose, the yokes are interconnected by means of bolts and nuts. Tightening up such relatively small components is often not easy in the rather unfavourable working environment in a trench in the ground. The staff who dig the trench and then lay the duct system cannot easily switch over from this coarser activity to the finer assembly work associated with the fastening of the yokes.

The electrical cables which interconnect the knife-shaped contacts run unprotected over the outside of the duct system. As a result, damage may occur even during the laying of the couplings or when filling the trench. The durability of the conductors and contacts is also adversely affected by the environment in the filled-in trench. As a consequence of this, there is a high risk of the interconnection of the electrical conductors being destroyed, as a result of which the duct system can virtually no longer be detected.

The object of the invention is therefore to provide a duct system which can be reliably detected and which, in addition, can be easily laid in a dug-out trench. Said object is achieved by means of a duct system for glass-fibre networks, comprising at least one coupling and also at least two duct pipes which each carry two electrical conductors at a distance from one another, which electrical conductors extend in each case from the one end of a duct pipe to its other end, which coupling comprises a housing which has at each of two ends a coupling sleeve in each of which a duct pipe is receivable, which coupling sleeves each have means for mechanically connecting the duct pipes, and also at least two separate contact means which each extend in the longitudinal direction of the coupling, which contact means are each in contact both with one of the electrical conductors of the one duct pipe and with one of the electrical conductors of the other duct pipe.

The duct system according to the invention offers first of all a reliable mechanical connection between two duct pipes in each case by means of the coupling sleeves in which the pipe ends can be rigidly secured. In addition, the same coupling sleeves are used for the electrical interconnection of the electrical conductors. Said interconnection is therefore well protected against external factors such as mechanical loads or the environment in the trench.

An important advantage is furthermore that the coupling makes possible a simpler plug-and-socket connection which can also be reliably brought about without much professional skill. In addition, the same plug-and-socket connection provides the electrical interconnection.

As already stated, the electrical conductors are embedded in the wall of each duct pipe over most of their length. According to the invention, the electrical conductors are each exposed at the external surface of the duct pipe near the ends, while the contact means are each situated on the internal wall of each coupling sleeve. As soon as the respective end of a duct pipe is inserted into the associated coupling sleeve, the electrical contact is also made.

Normally speaking, the duct pipes and the couplings have circular cross-sections. At the same time, the contact means are designed as shell-like parts which extend over a portion of the internal circumference with the inclusion of an insulating means. With such circular cross-sections, the coupling and the duct pipes may end up in different rotated positions with respect to each other. In general, that is not a problem: the shell-like parts each cover approximately half the internal surface of a coupling sleeve so that contact is virtually always ensured even if the duct pipes are none too accurately inserted.

Nevertheless, in order to avoid the small risk that the electrical conductors might be situated in the small region between the shells, the coupling and the duct pipes may carry a reference mark for aligning them with respect to one another so that the electrical conductors come into contact with the contact pieces.

Each coupling preferably has shell-like parts which extend over almost 180 degrees and which at their centre in the axial direction have a stop for limiting the inserted length of the duct pipes.

Furthermore, each coupling sleeve is provided with a sealing ring which can be made to interact with the external surface of a duct pipe to form a seal and also with a clamping ring surrounded by a turnbuckle for clamping a duct pipe, which turnbuckle interacts with the housing by means of a screw thread.

An important advantage is furthermore that the exposed ends of the electrical conductors are situated completely inside the coupling sleeve and inside the associated seals.

Under these circumstances the electrical conductors and also the contacts are well protected against external factors, such as groundwater and the like.

The invention furthermore relates to a coupling for a duct system as described above, which coupling comprises a housing which has at each of two ends a coupling sleeve, in each of which a duct pipe can be received, which coupling sleeves each have means for mechanically connecting the duct pipes, and also at least two separate contact means which each extend in the longitudinal direction, which contact means can each be brought into contact both with one of the electrical conductors of the one duct pipe and with one of the electrical conductors of the other duct pipe.

The coupling preferably has a circular cross-section, the contact means being designed as shell-like parts which extend over a portion of the internal circumference of the housing with the inclusion of an insulating means.

Finally, the invention relates to a method for manufacturing a duct system as described above, making use of such a coupling, comprising the steps of providing at least two duct pipes which have at least two electrical conductors at a distance from one another, which electrical conductors extend in each case from the one end of a duct pipe to its other end and are embedded in the pipe wall, exposing the electrical conductors near the ends of the duct pipes, and also inserting the duct pipes into the coupling sleeves, in which process the electrical conductors of one duct pipe each come into contact with a contact means.

As already stated, the electrical conductors are embedded in the wall of the duct pipes. The method therefore also comprises the step of exposing the electrical conductors on the external surface of the duct pipes and bending the exposed parts of the electrical conductors away from the associated end of the duct pipe.

The duct system according to the invention and designed in this way is very suitable for installing glass-fibre cables by means of blowing. After all, the couplings according to the invention offer such a good seal that blowing pressures of up to 12 bar can be used without problems. A further advantage is that the diameter of the couplings is only slightly larger than the diameter of the duct pipes, which yields a space saving which is primarily of importance in laying a plurality of duct pipes next to one another in a narrow trench.

The application will be explained in greater detail below with reference to an exemplary embodiment shown in the figures.

Figure 1 shows a view of the duct system according to the invention in perspective.

Figure 2 shows a cross-section through the coupling of the duct system.

Figure 3 shows a disassembled view of the coupling with connecting duct pipes, partially in longitudinal section.

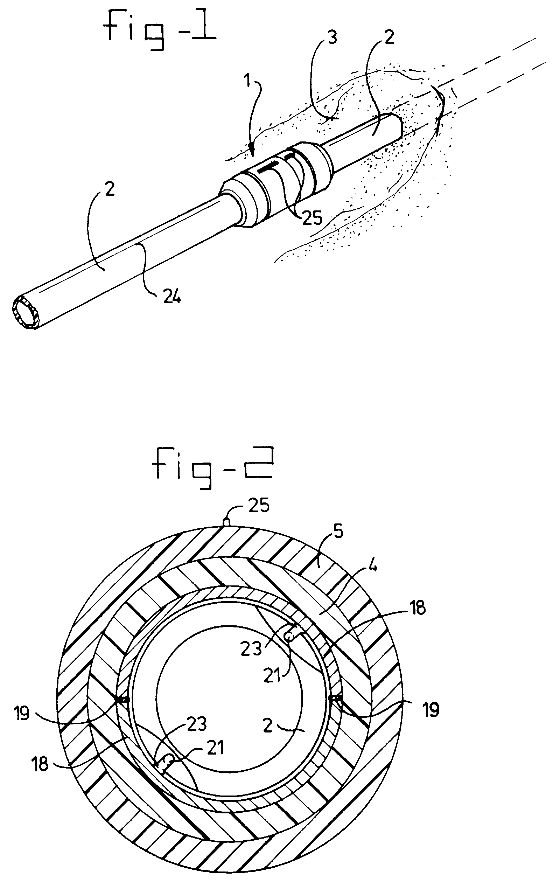

The duct system according to the invention shown in Figure 1 comprises a coupling 1 by means of which two duct pipes 2 are coupled to one another. The duct system 1, 2 is received in the soil 3, for example underneath a road or a pavement.

A number of glass-fibre cables can be pulled or blown through the duct system 1, 2 so that they are well protected in the soil 3.

Figure 3 shows the coupling in more detail in a disassembled state and partially in longitudinal section. The coupling comprises two coupling sleeves 4, 5 which can be attached to one another by means of a female screw thread 6 or a male screw thread 7, respectively, and rendered inseparable by adhesive. This inseparable connection can also be obtained, for example, by ultrasonic welding. At their mutually remote ends, the coupling sleeves 4, 5 also have a male screw thread 8 which can interact with the female screw thread 9 in the turnbuckles 10.

Each coupling sleeve 4, 5 has, at its end, a recess 11 in which a pressure ring 12 having a conical internal surface is received. The conical internal surface of each pressure ring 12 interacts with the conical external surface of a clamping ring 13 which is pressed on by the radial surface 14 of each turnbuckle 10.

The clamping rings 13 have an oblique cut 15. When the turnbuckles 10 are tightened up on the respective coupling sleeves 4, 5, the surfaces 12, 13 slide over one another, in which process the clamping rings 13, in particular their barb-like teeth 16, are forced into the external surface of the duct pipes 2. The mechanical attachment of the duct pipes 2 to the coupling 1 can be effected in this way.

Both coupling sleeves 4, 5 furthermore have a circumferential sealing profile 17, known per se, which, when the duct pipes 2 are inserted, ends up rigidly against the external surface of the latter so that no water or other substances can penetrate into the space delineated between the two seals 17.

According to the invention, there is provided in the space between the two seals 17 two half shell-like parts 18 which both extend over approximately 180° of the internal wall of the coupling sleeve 5. The shell-like parts are each separated at their ends by an insulating layer 19 in such a way that they do not make any electrical contact. Viewed in the axial direction at their centre, both shell halves have a rib 20, which ribs 20 determine the furthest insertion depth of the two pipes 2.

Received in the wall of the pipes 2 are two electrical conductors 21. Said electrical conductors are exposed over a short portion, and specifically, at the position of the removed portions of the wall 21. The exposed portions 23 thus obtained are then bent over to above the outside of the pipe 2, as can be seen in the right-hand pipe of Figure 3.

When the pipes 2 are inserted into the coupling sleeves 4, 5, the bent-over portions 23 of the electrical conductors end up rigidly against the shell halves 18. Since said shell halves 18 extend over virtually the entire internal wall, the chance is very small that the bent-over portions end up precisely at the position of the insulation 19.

An electrical contact will therefore be brought about between the electrical conductors 21, in each case via the two shell halves 18.

In order to ensure that the bent-over portions 23 of the pipes 2 are always in contact in the correct miner with the respective shell-like part 18, the reference marks 24 (generally in the form of a coloured line) already present as standard on the duct pipes 2 can be aligned with respect to the reference marks 25 on the coupling sleeves 4, 5.

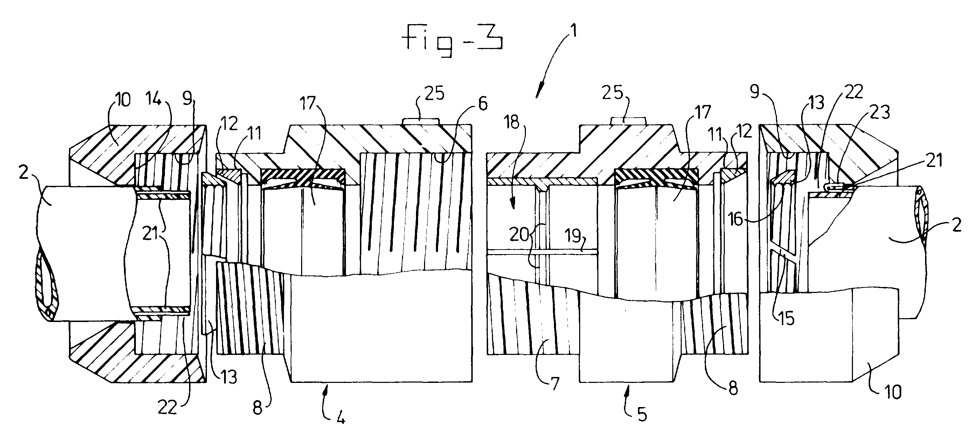

Figure 2 clearly shows that the bent-over portions 23 are held rigidly pressed between the external wall of the duet pipe 2 and the internal wall of the shells 18. An excellent electrical interconnection is thus ensured.

## Claims

1. Duct system for glass-fibre networks, comprising at least one coupling (1) and also at least two duct pipes (2) which each carry at least two electrical conductors at a distance from one another, which electrical conductors (21) extend in each case from the one end of a duct pipe (2) to its other end, which coupling (1) comprises a housing which has at each of two ends a coupling sleeve (4, 5) in each of which a duct pipe (2) is receivable, which coupling sleeves (4, 5) each have means (10-13) for mechanically connecting the duct pipes, and also at least two separate contact means (18) which extend in the longitudinal direction of the coupling, which contact means (18) are each in contact both with one of the electrical conductors (21) of the one duct pipe (2) and with one of the electrical conductors (21) of the other duct pipe (2).

2. Duct system according to Claim 1, wherein the electrical conductors (21) are embedded in the wall of each duct pipe (2) over the greatest portion of their length, and are each exposed (23) at the external surface of the duct pipe (2) near the ends, and the contact means (18) are each situated on the internal wall of each coupling sleeve (4, 5).

3. Duct system according to Claim 1 or 2, wherein the duct pipes (2) and the coupling (1) have circular cross-sections and the contact means are designed as shell-like parts (18) which extend over a portion of the internal circumference with the inclusion of an insulating means (19).

4. Duct system according to Claim 3, wherein the coupling (1) and the duct pipes (2) carry a reference mark (24, 25), for roughly aligning them with respect to one another so that the electrical conductors (21) come into contact with the contact pieces (18).

5. Duct system according to one of Claims 1-4, wherein each coupling (1) has two shell-like parts (18) which extend over almost 180 degrees and which have at their centre in the axial direction a stop (20) for limiting the insertion length of the duct pipes (2).

6. Duct system according to one of Claims 1-5, wherein each coupling sleeve (4, 5) is provided with a sealing ring (17) which can be made to interact with the external surface of a duct pipe (2) to form a seal.

7. Duct system according to Claim 2, wherein the exposed ends of the electrical conductors are situated completely inside the coupling sleeve (4, 5) and inside the associated seals (17).

8. Duct system according to one of Claims 1-7, wherein each coupling sleeve (4, 5) is provided with a clamping ring (13) surrounded by a turnbuckle (10) for clamping a duct pipe (2), which turnbuckle interacts with the housing by means of screw thread.

9. Coupling (1) for a duct system according to one of the preceding claims, which coupling (1) comprises a housing which has at each of two ends a coupling sleeve (4, 5) in each of which a duct pipe (2) is receivable, which coupling sleeves (4, 5) each have means (10-13) for mechanically connecting the duct pipes (2), and also at least two separate contact means (18) which each extend in the longitudinal direction, which contact means (18) can each be brought into contact both with one of the electrical conductors (21, 23) of the one duct pipe (2) and with one of the electrical conductors (21, 23) of the other duct pipe (2).

10. Coupling according to Claim 9, wherein the coupling (1) has a circular cross-section and the contact means are designed as shell-like parts (18) which extend over a portion of the internal circumference of the housing with the inclusion of an insulating means (19).

11. Coupling according to Claim 9 or 10, wherein each coupling (1) has two shell-like parts (18) which extend over almost 180 degrees and which have at their centre in the axial direction a stop (20) for limiting the insertion length of the duct pipes (2).

12. Coupling according to Claim 9, 10 or 11, wherein each coupling sleeve (4, 5) is provided with a sealing ring (17) which can be made to interact with the external surface of a duct pipe (2) to form a seal.

13. Coupling according to Claim 9, 10, 11 or 12, wherein, in the case of each coupling sleeve, the exposed ends of the electrical conductors are situated completely inside the coupling sleeve (4, 5) and inside the associated seals (17).

14. Method for manufacturing a duct system according to one of Claims 1-8, making use of a coupling (1) according to one of Claims 9-13, comprising the steps of providing at least two duct pipes (2) which have at least two electrical conductors (21) at a distance from one another, which electrical conductors extend in each case from the one end of a duct pipe (2) to its other end and are embedded in the pipe wall, exposing (23) the electrical conductors (21) near the ends of the duct pipes (2), and also inserting the duct pipes (2) into the coupling sleeves (4, 5), in which process the electrical conductors (21) of one duct pipe (2) each come into contact with a contact means (18).

15. Method according to Claim 14, wherein the electrical conductors (21) are embedded in the wall of the duct pipes (2), comprising the step of exposing (23) the electrical conductors (21) on the external surface of the duct pipes (2) and bending the exposed parts (23) of the electrical conductors (21) away from the associated end of the duct pipe (2).

16. Method according to Claim 14 or 15, comprising the step of aligning the reference marks (24, 25) on the coupling (1) and the duct pipes (2) so that the exposed electrical conductors (21, 23) and the contact means (18) are roughly aligned with respect to each other.
